# EUROPÄISCHE PATENTSCHRIFT

(11) **EP 3 523 755 B1**
(45) Veröffentlichungstag und Bekanntmachung des Hinweises auf die Patenterteilung: **28.08.2024**
(21) Anmeldenummer: 17787352.8
(22) Anmeldetag: 04.10.2017
(51) Int. Cl.: G06V 10/25, G06V 10/143, G06V 10/22, G06V 10/24, G06V 30/424, G07F 7/06

(54) **DETEKTIONSVERFAHREN UND VORRICHTUNG ZUR ERFASSUNG VON SICHERHEITSMERKMALEN BEI PFANDSYSTEMEN**
DETECTION METHOD AND APPARATUS FOR CAPTURING SECURITY FEATURES IN DEPOSIT SYSTEMS
PROCÉDÉ DE DÉTECTION ET DISPOSITIF DE DÉTECTION DE SIGNES DE SÉCURITÉ DANS DES SYSTÈMES DE CONSIGNE

(30) Priorität: 04.10.2016 DE 102016011766
(43) Veröffentlichungstag der Anmeldung: 14.08.2019
(73) Patentinhaber: QUISS Qualitäts-Inspektionssysteme und Service GmbH, 82178 Puchheim (DE)
(72) Erfinder: GRUBER, Bernhard, 82131 Stockdorf (DE)
(74) Vertreter: Kehl, Ascherl, Liebhoff & Ettmayr Patentanwälte Partnerschaft mbB
(86) Internationale Anmeldenummer: PCT/EP2017/075263
(87) Internationale Veröffentlichungsnummer: WO 2018/065495

(56) Entgegenhaltungen:
- EP-A1- 1 953 674
- EP-B1- 0 932 877
- WO-A1-2015/079461
- US-A1- 2013 129 203
- US-A1- 2013 329 006
- US-A1- 2014 293 270

## Beschreibung

Die vorliegende Erfindung bezieht sich gemäß Anspruch 1 auf ein Verfahren zum Überprüfen von zumindest einem mittels einer Sicherheitsfarbe erzeugtem farblichen Sicherheitsmerkmal einer Sicherheitsmarkierung auf einer Pfandverpackung oder eines Pfandverpackungsbestandteils. Ferner bezieht sich die Erfindung auf eine Vorrichtung gemäß Anspruch 12, auf einen Rücknahmeautomat für Pfandverpackungen gemäß Anspruch 14 und auf ein Computer Programm Produkt gemäß Anspruch 15.

Sicherheitsmerkmale von Pfandsystemen betreffende Gegenstände werden z.B. durch die Schrift EP1953674A1 offenbart.

Es ist Aufgabe der vorliegenden Erfindung ein verbessertes Verfahren zur Analyse von Sicherheitsmerkmalen bei Pfandsystem, insbesondere im Bereich der Lebensmittelverpackungen, bereitzustellen. Das verbesserte Verfahren dient bevorzugt zum besserten Erfassen von auf Pfandgegenständen, wie z.B. Lebensmittelbehältern, insbesondere Getränkebehältern, insbesondere Flaschen und/oder Dosen, angebrachten Sicherheitsmerkmalen, wenn diese Sicherheitsmerkmale gegenüber einer Kameraeinrichtung bewegt werden.

Die zuvor genannte Aufgabe wird durch eine Verfahren gemäß Anspruch 1 gelöst. Das Verfahren umfasst dabei mindestens die Schritte: Beleuchten der Verpackung oder des Verpackungsbestandteils mit Licht einer ersten Wellenlänge, Erfassen zumindest eines Anteils der reflektierten Lichtmenge mittels einer Kameraeinrichtung zur Bereitstellung von Identifikations-Bilddaten, Wiederholen der zuvor genannten Schritte in vorbestimmten Identifikations-Zeitabständen bis ein vordefiniertes Referenzobjekt der Sicherheitsmarkierung in den Identifikations-Bilddaten identifizierbar ist, Beleuchten der Verpackung oder des Verpackungsbestandteils mit Licht einer Vielzahl weiterer Analyse-Wellenlängen, wobei die Verpackung oder der Verpackungsbestandteil nacheinander mit den einzelnen weiteren Analyse-Wellenlängen beleuchtet wird, um verschiedene Analyse-Bilddaten des Sicherheitsmerkmals in Abhängigkeit von den Analyse-Wellenlängen zu erzeugen, wobei die einzelnen Beleuchtungen mit den weiteren Analyse-Wellenlängen nacheinander in Analyse-Zeitabständen erfolgen, wobei die Analyse-Zeitabstände kürzer sind als die Identifikations-Zeitabstände, Erfassen zumindest eines Anteils der reflektierten Lichtmenge des Lichts jeder weiteren Analyse-Wellenlänge mit der Kameraeinrichtung (8) zur Bereitstellung von Analyse-Bilddaten, Auswerten der Analyse-Bilddaten, wobei eine mathematische Aufbereitung der erfassten Analyse-Bilddaten und/oder ein Abgleich der erfassten Analyse-Bilddaten als Soll-Ist-Wert-Vergleich mit hinterlegten Spektralanalysedaten des Sicherheitsmerkmals erfolgt und Ausgeben eines Ergebniswerts oder Ergebnissignals in Abhängigkeit von der Auswertung, die angibt, ob das Sicherheitsmerkmal der Sicherheitsmarkierung einen als valide definierten Parameter der Pfandverpackung oder des Pfandverpackungsbestandteils wiedergibt.

Eine solche erfindungsgemäße Vorrichtung umfasst somit bevorzugt mindestens eine Beleuchtungseinrichtung mit mehreren Beleuchtungswellenlängen zum Beleuchten von zumindest einem Anteil der Verpackung oder des Verpackungsbestandteiles, eine Kameraeinrichtung zum Erfassen von mehreren Aufnahmen des farblichen Sicherheitsmerkmals der Verpackung oder dem Verpackungsanteil während der, synchron zur Aufnahme geschalteten, Beleuchtung der Verpackung oder des Verpackungsbestandteils mittels der Beleuchtungseinrichtung, wobei jede der Aufnahmen eine Menge an reflektiertem Licht einer vorbestimmten Wellenlänge repräsentiert, wobei die Wellenlänge zumindest hinsichtlich der Aufnahmen voneinander verschieden sind und damit die spektrale Reflexionseigenschaft der Sicherheitskennzeichnung repräsentieren und eine Auswerteinheit zum Bestimmen der Menge an reflektiertem Licht je erfasster Aufnahme und zum Abgleichen der erfassten Werte oder einer mathematischen Aufbereitung der erfassten Werte mit einem Referenzkriterium und zum Ausgeben eines Ergebniswerts oder Ergebnissignals in Abhängigkeit von dem Abgleich.

Diese Lösung ist vorteilhaft, da sehr genau und wiederholbar die spezielle Eigenschaft der Sicherheitskennzeichnung, nämlich der Veränderung des Reflexionsgrades in Abhängigkeit von der jeweiligen Wellenlänge der Beleuchtung, erfasst und als Sicherheitskriterium verwendet werden kann.

Als eine Sicherheitskennzeichnung wird im Rahmen der vorliegenden Erfindung eine Farbe bezeichnet, deren Reflexionsverhalten bei unterschiedlichen Beleuchtungswellenlängen bekannt ist. Sie weist bevorzugt überwachte und kontrolliert ausgegebene Farbpartikel und Bestandteile auf die die Verwendung der Sicherheitsfarbe repräsentieren. Bevorzugt handelt es sich bei der Sicherheitskennzeichnung um eine Kennzeichnung der DPG Deutsche Pfandsysteme GmbH.

Ein Beleuchten der Sicherheitskennzeichnung mit Licht jeweils einer Wellenlänge und einer gleichzeitigen Bildaufnahme ist zu verstehen, dass das reflektierte Licht von der Kameraeinrichtung erfasst wird. Abhängig von der erforderlichen Anzahl von Beleuchtungswellenlängen werden, zeitlich versetzt, nacheinander Aufnahmen der Verpackung oder des Verpackungsbestandteiles erzeugt. Bei einer größeren Anzahl von Aufnahmen in Serie (drei oder mehr), würde sich der Zeitraum für die Aufnahme, speziell bei einer Bewegung der Verpackung oder des Verpackungsbestandteiles, enorm verlängern. Erfindungsgemäß wird dieser Nachteil durch eine Kombination einer schnellen monochromatischen Aufnahme, d.h. nur einer Wellenlänge, in kurzen Abständen mit einem AOI "Area Of Interest" (interessantem Gebiet) kombiniert. Dazu werden Aufnahmen in einem kurzen zeitlichen Intervall, bevorzugt mit einer Wiederholfrequenz von z.B. 30Hz oder 50Hz, mit nur einer Wellenlänge erzeugt und in jeder Aufnahme wird durch die Bildauswerteeinheit die Sicherheitskennzeichnung gesucht. Bevorzugt ist dazu der CCD- oder CMOS-Chip der Kamera auf eine Vollbildaufnahme oder zumindest auf einen großen Bildaufnahmebereich eingestellt. Sobald in einer Aufnahme die Sicherheitskennzeichnung gefunden wurde, kann der Auslesebereich der CCD- oder CMOS-Chip der Kamera auf eine reduzierte Anzahl von Zeilen (Partial Scan) oder auf einen AOI (Area Of Interest) reduziert werden und dies ermöglicht eine sehr schnelle Serienaufnahme mit der erforderlichen Anzahl von Beleuchtungswellenlängen mit einer Wiederholfrequenz von z.B. 500 Hz. Damit kann mit nur einer Kamera eine sehr schnelle und effiziente Überprüfung der Sicherheitskennzeichnung erfolgen. Die Kameraeinrichtung erfasst bevorzugt Bilddaten mit einer Frequenz die kleiner ist als 50 Bilder pro Sekunde. Dies ist vorteilhaft, da sehr günstige Kameraeinrichtungen, wie z.B. Grauwertkameras, verwendet werden können und dennoch eine sehr hohe Erfassungsqualität erreicht wird. Geeignete Grauwertkameras sind beispielsweise unter der Bezeichnung mvBlueFOX3 kommerziell erhältlich, beispielsweise mit Auflösungen von 1280 x 960 Pixeln oder 1280 x 1024 Pixel.

Die einzelnen emittierten Lichtmengen jeder Beleuchtungswellenlänge sind bevorzugt durch die jeweils gleiche Intensität und/oder Energie gekennzeichnet. Dies kann durch eine Stromanpassung in der Ansteuerung der LEDs (Licht-emittierende Diode) oder durch eine Anpassung der Beleuchtungs- oder Belichtungszeit erfolgen. Die jeder Beleuchtungswellenlänge zugehörigen Lichtmengen sind bevorzugt in der Auswerteeinheit hinterlegt und werden besonders bevorzugt normiert zur Auswertung weiterverarbeitet.

Bevorzugt wird bei einer Bewegung der Verpackung oder des Verpackungsbestandteiles, während der zeitlich versetzen Aufnahmen mit nur einer Beleuchtungswellenlänge, sobald in zwei Aufnahmen hintereinander die Sicherheitskennzeichnung gefunden wurde, der Vektor der Bewegung berechnet und die definierte Position der Sicherheitskennzeichnung im Gesamtbild der Kamera kann bevorzugt für die nächste bzw. für die Serienaufnahme mit den unterschiedlichen Beleuchtungswellenlängen vorausberechnet werden. Damit kann bevorzugt der Aufnahmebereich (AOI) für die Serienaufnahme weiter eingeschränkt und die Aufnahmefrequenz erhöht werden.

Weitere bevorzugte Ausführungsformen oder Varianten sind Gegenstand der nachfolgenden Beschreibungsteile oder der Ansprüche.

Gemäß einer weiteren bevorzugten Ausführungsform der vorliegenden Erfindung liegen zumindest die Mehrzahl der hinsichtlich der reflektierten Lichtmenge erfassten Wellenlängen in dem Farbumschlagintervall, wobei in dem Farbumschlagsintervall in einem ersten Bereichsende mindestens 80% des in der entsprechenden Wellenlänge ausgestrahlten Lichts reflektiert wird und in einem zweiten Bereichsende weniger als 20% des in der entsprechenden Wellenlänge ausgestrahlten Lichts reflektiert wird.

Gemäß einer weiteren bevorzugten Ausführungsform der vorliegenden Erfindung ist das erste Bereichsende um mindestens 20nm und bevorzugt um mindestens 30nm und besonders bevorzugt um mindestens 40nm vom zweiten Bereichsende beabstandet, wobei das zweite Bereichsende im Nahen-Infrarotbereich (NIR) liegt.

Gemäß einer weiteren bevorzugten Ausführungsform der vorliegenden Erfindung umfassen die Identifikations-Bilddaten je Erfassung mindestens das 10-fache, insbesondere mindestens das 20-fache oder mindestens das 50-fache oder mindestens das 100-fache, an Bildinformationen als die Analyse-Bilddaten je Erfassung umfassen.

Darin zeigt:
- Fig. 1a-1c: verschiedene Zeitintervalle, in denen unterschiedliche Lichtwellen emittiert werden;
- Fig. 2a-2c: drei abstrahiert dargestellte bevorzugt Verfahrensschritte des erfindungsgemäßen Verfahrens;
- Fig. 3: einen weiteren bevorzugten und abstrahiert dargestellten Verfahrensschritt des erfindungsgemäßen Verfahrens; und
- Fig. 4: eine schematische Darstellung einer erfindungsgemäßen Vorrichtung zum Ausführen des erfindungsgemäßen Verfahrens.

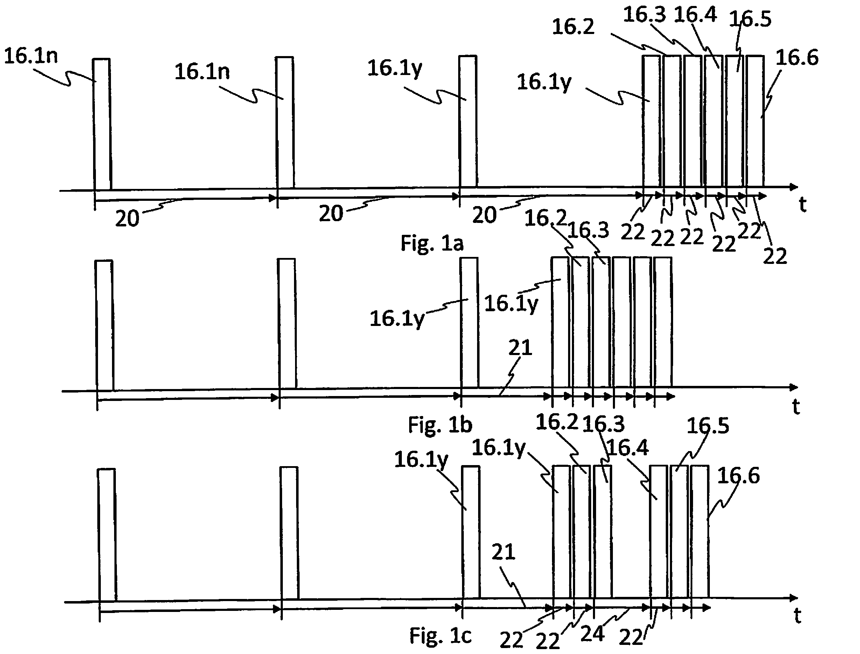

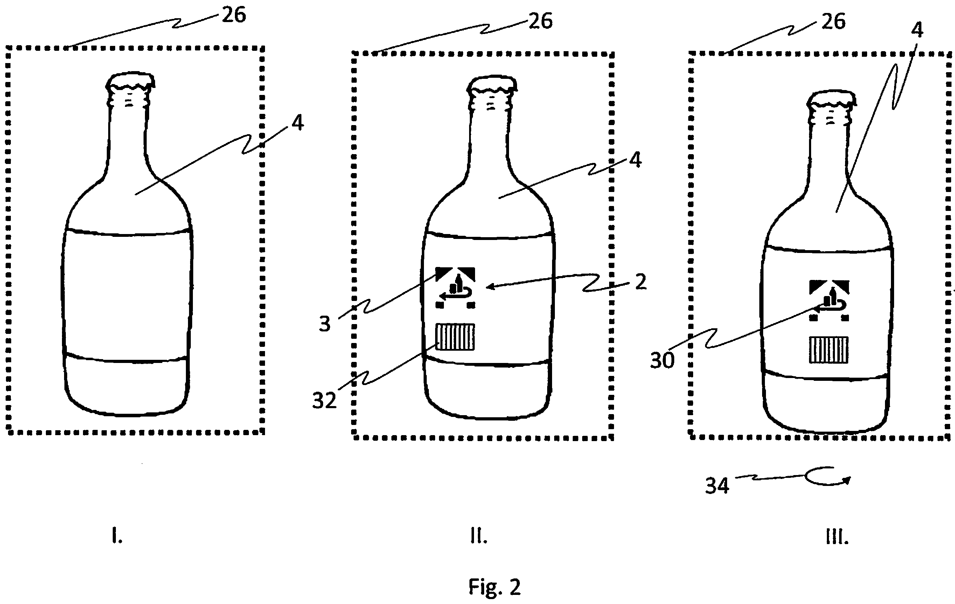

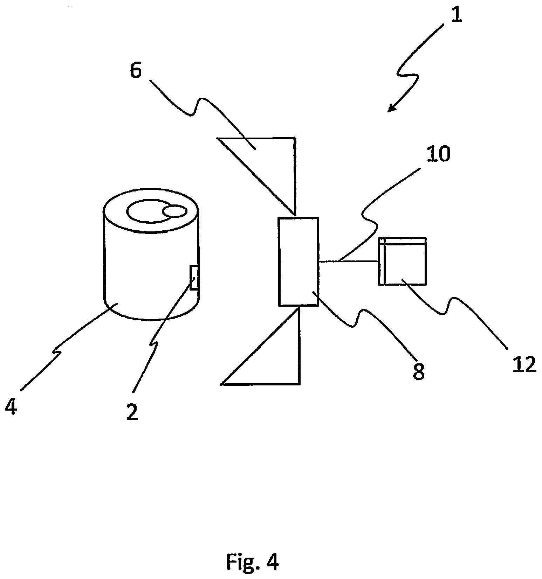

In den Figuren 1a-1c stellt die mit dem Bezugszeichen t gekennzeichnete Achse einen Zeitstrahl dar. Es ist somit ersichtlich, dass die Beleuchtungen 16.1n, 16.1y und 16.2-16.6 nacheinander und bevorzugt zeitversetzt zueinander ausgeführt werden. Die Beleuchtungen 16.1n und 16.1y erfolgen mit derselben Wellenlänge. Die Beleuchtungen 16.1n treten dabei jedoch nicht zwingend auf, da sie Beleuchtungen der Verpackung 4 oder des Verpackungsbestandteils repräsentieren, bei denen kein Referenzobjekt 3 des Sicherheitsmerkmals 2 identifiziert werden konnte. Wurde ein Referenzobjekt 3 identifiziert, so weist das Bezugszeichen anstelle eines "n" ein "y" auf. Wird somit bei der ersten Beleuchtung mit der ersten Wellenlänge bereits ein Referenzobjekt 3 identifiziert, so tritt in diesem Falle kein Bezugszeichen 16.1n auf. Nach der Identifizierung des Referenzobjekts 3, das bevorzugt eine vorbestimmte geometrische Gestalt eines Sicherheitsmerkmals eines Pfandsystems ist, wir bevorzugt eine zweite Beleuchtung der Verpackung 4 oder des Verpackungsbestandteils vorgenommen (vgl. Fig. 2b). Das Zeitintervall kann hierbei dem Identifikations-Zeitintervall 2 entsprechen oder ein Bruchteil davon sein (vgl. Fig. 1b Bezugszeichen 21) oder länger sein. Mit der zweiten bzw. weiteren Erfassung des Referenzobjekts 3 wird bevorzugt ein Bewegungsvektor der Verpackung 4 bzw. des Verpackungsbestandteils bestimmt bzw. berechnet. Dieser Bewegungsvektor kann dann zur Bestimmung der Relativposition des Sicherheitsmerkmals 30 gegenüber der Kameraeinrichtung 8 (vgl. Fig. 4) in Abhängigkeit der Zeit verwendet werden. In Kenntnis der Relativposition des Sicherheitsmerkmals 30 gegenüber der Kameraeinrichtung 8 erfolgt dann bevorzugt eine Reduzierung der auszuwertenden Bilddaten auf einen Bereich, in dem sich das Sicherheitsmerkmal zur jeweiligen Beleuchtung mit Analyse-Wellenlängen befindet bzw. befinden wird. Die anderen Bildbestandteile bzw. Bilddaten, die ein Vielfaches der dann tatsächlich ausgewerteten Bildbestandteile bzw. Bilddaten darstellen, müssen dann nicht analysiert werden, wodurch Rechenleistung einer Auswerteeinrichtung 12 eingespart und/oder die Rechengeschwindigkeit der Auswerteeinrichtung 12 erhöht werden kann.

Ferner wird bevorzugt unmittelbar, insbesondere in einem Analyse-Zeitintervall, nach der Bestimmung des Bewegungsvektors eine Abfolge an Beleuchtungen mit Analyse-Wellenlängen gestartet. Die einzelnen Wellenlängen sind dabei bevorzugt voneinander verschieden.

Fig. 1c zeigt, dass zwischen der Beleuchtung mit den Analyse-Wellenlängen unterschiedliche Zeitintervalle, insbesondere Analyse-Zeitintervalle und/oder Pausen-Zeitintervalle, vorgesehen sein können.

Jede Wellenlänge bevorzugt durch eine eigene Lichtquelle, insbesondere LED bzw. geblitzte LED, erzeugt wird. Ferner kann vor den einzelnen Lichtquellen, insbesondere LEDs, insbesondere der ersten Wellenlänge und/oder einer oder mehreren Analyse-Wellenlängen, der Mehrheit der Lichtquellen oder allen Lichtquellen ein Filter vorgesehen sein. Der Filter ist bevorzugt ein optischer Filter, mit dem sich die auf der Verpackung 4 oder dem Verpackungsbestandteil ankommenden Wellenlängen auf einen Bereich von +/- 15nm und bevorzugt von +/- 10nm und bevorzugt von +/- 5nm und bevorzugt von +/- 1nm begrenzen lassen.

Die Figuren 1a-1c zeigen somit in anderen Worten Zeitschienen mit einem Zeitintervall der Beleuchtungsansteuerung durch die Beleuchtungseinrichtung 6 mit einer Wellenlänge 16.1 und einer synchronen Vollbildaufnahme 22 mit der Kameraeinrichtung 8 in einem Zeitintervall von bevorzugt 20 ms (entspricht 50Hz). Sofern das Sicherheitsmerkmal 2 durch die Auswerteeinrichtung 12 nicht gefunden wird, wird der Zyklus wiederholt. Sobald durch die Auswerteinrichtung 12 das Sicherheitsmerkmal 2 findet, erfolgt eine Beleuchtungsansteuerung durch die Beleuchtungseinrichtung 6 in einer hochfrequenten Serie, bevorzugt in einem Intervall von 2 ms (entspricht 500Hz), von 16.1 bis 16.x und synchron dazu eine Aufnahme mit der Kameraeinrichtung 8 mit einem reduzierten Bildbereich 24.

Es ist damit ersichtlich, dass der reduzierte Bildbereich, definiert von seiner Position durch die Auswerteeinheit aus den Aufnahmen der ersten Wellenlänge 16.1, eine hohe Aufnahmefrequenz der weiteren Wellenlängen 16.1 - 16.x ermöglicht.

Sofern die Verpackung in Bewegung aufgenommen wird, kann bei zwei Aufnahmen mit der ersten Wellenlänge 16.1 der Richtungsvektor für die Serienaufnahme bestimmt werden. Dies ermöglicht, den reduzierten Bildbereich 24 weiter zu reduzieren und die Serienaufnahme mit den weiteren Wellenlängen 16.1 - 16.x zu beschleunigen. Außerdem kann über den Richtungsvektor ein Betrugsversuch durch ein Rückziehen der Verpackung oder des Sicherheitsmerkmals erkannt werden.

Fig. 2a zeigt einen ersten Schritt I. des erfindungsgemäßen Verfahrens. Hierbei wird eine Verpackung 4 oder ein Verpackungsbestandteil mit einer ersten Wellenlänge bzw. mit Strahlung eines ersten Wellenlängenbereichs beleuchtet. Das reflektierte Licht wird erfasst und erfolgt eine Bildauswertung der als Identifikations-Bilddaten 26 bezeichneten Bildinformation. Die Bilddaten weisen hierbei kein Referenzobjekt 3 eines Sicherheitsmerkmals 2 auf, wodurch eine weitere Erfassung durchgeführt wird. Der zuvor beschriebene Schritt beschreibt somit analog den bezüglich des Bezugszeichens 16.1n (Fig. 1a) erläuterten Sachverhalt.

Der Schritt II. zeigt, dass bei einer weiteren Erfassung der ersten Wellenlänge zu einem späteren Identifikations-Zeitintervall 20 (vgl. Fig. 1a) die Identifikations-Bilddaten 26 durch eine Relativbewegung der Verpackung 4 bzw. des Verpackungsanteils ein in den erfassbaren Bereich der Kameraeinrichtung bewegtes Sicherheitsmerkmal 2, insbesondere mit Referenzobjekt 3, aufweisen.

Ferner werden alle weiteren erfassbaren Bestandteile der Verpackung 4 bzw. des Verpackungsbestandteils erfasst, diese können z.B. auch einen Code 32, insbesondere einen Barcode oder QR-Code, aufweisen. Dieser Schritt beschreibt analog den bzgl. des zeitlich älteren Bezugszeichens 16.1y erläuterten Sachverhalt (vgl. Fig. 1a).

Schritt III. zeigt eine weitere Erfassung von Licht der ersten Wellenlänge bzw. des ersten Wellenlängenbereichs. Die Veränderung der Position des Sicherheitsmerkmals bzw. des Referenzobjekts 3 wird dabei bevorzugt ausgewertet bzw. verwendet um einen Bewegungsvektor der Verpackung 4 bzw. des Verpackungsanteils zu bestimmen bzw. zu errechnen. Das Bezugszeichen 34 gibt hierbei schematisch eine Bewegung der Verpackung 4 bzw. des Verpackungsbestandteils an. Die Bewegung 34 kann hierbei bevorzugt rotatorisch und/oder translatorisch sein. Analog hierzu gehören die Ausführungen zu dem zeitlich jüngeren Bezugszeichen 16.1y der Fig. 1a.

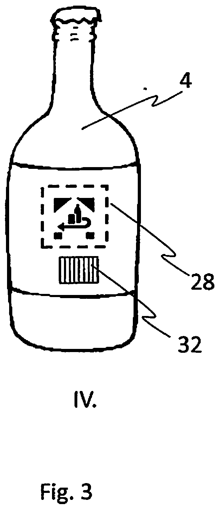

Fig. 3 zeigt einen weiteren Schritt. Bevorzugt werden die auszuwertenden Daten auf Analyse- Bilddaten 28 reduziert, deren Position bzw. Erstreckung im bestimmt oder berechnet wird. Bevorzugt werden die Analyse- Bilddaten 28 mittels des zuvor bestimmten Bewegungsvektors bestimmt, insbesondere für die einzelnen Analyse-Wellenlängen.

Somit bezieht sich die vorliegende Erfindung bevorzugt auf ein Verfahren zum Überprüfen von zumindest einem mittels einer Sicherheitsfarbe erzeugtem farblichen Sicherheitsmerkmal 30 einer Sicherheitsmarkierung 2 auf einer Pfandverpackung 4 oder eines Pfandverpackungsbestandteils. Bevorzugt umfasst das Verfahren mindestens die Schritte:
Beleuchten der Verpackung 4 oder des Verpackungsbestandteils mit Licht einer ersten Wellenlänge. Erfassen zumindest eines Anteils der reflektierten Lichtmenge mittels einer Kameraeinrichtung 8 zur Bereitstellung von Identifikations-Bilddaten 26, Wiederholen der zuvor genannten Schritte in vorbestimmten Identifikations-Zeitabständen bis ein vordefiniertes Referenzobjekt der Sicherheitsmarkierung in den Identifikations-Bilddaten identifizierbar ist. Beleuchten der Verpackung 4 oder des Verpackungsbestandteils mit Licht einer Vielzahl weiterer Analyse-Wellenlängen. Bevorzugt sind die weiteren Analyse-Wellenlängen von der ersten Wellenlänge verschieden. Ferner wird die Verpackung 4 oder der Verpackungsbestandteil nacheinander mit den einzelnen weiteren Analyse-Wellenlängen bevorzugt beleuchtet, um verschiedene Analyse-Bilddaten des Sicherheitsmerkmals in Abhängigkeit von den Analyse-Wellenlängen zu erzeugen. Weiterhin erfolgen besonders bevorzugt die einzelnen Beleuchtungen mit den weiteren Analyse-Wellenlängen nacheinander in Analyse-Zeitabständen. Die Analyse-Zeitabstände sind bevorzugt kürzer als die Identifikations-Zeitabstände. Erfassen zumindest eines Anteils der reflektierten Lichtmenge des Lichts jeder weiteren Analyse-Wellenlänge mit der Kameraeinrichtung 8 zur Bereitstellung von Analyse-Bilddaten. Auswerten der Analyse-Bilddaten. Bevorzugt erfolgt eine mathematische Aufbereitung der erfassten Analyse-Bilddaten und/oder ein Abgleich der erfassten Analyse-Bilddaten als Soll-Ist-Wert-Vergleich mit hinterlegten Spektralanalysedaten des Sicherheitsmerkmals. Ausgeben eines Ergebniswerts oder Ergebnissignals in Abhängigkeit von der Auswertung, die angibt, ob das Sicherheitsmerkmal der Sicherheitsmarkierung einen als valide definierten Parameter der Pfandverpackung oder des Pfandverpackungsbestandteils wiedergibt. Der als valide definierte Parameter ist hierbei bevorzugt ein Parameter, der angibt ab welchem Grad oder Wert das Sicherheitsmerkmal als gefälscht oder als nicht gefällt zu bewerten ist.

Fig. 3 zeigt somit das Kamera-Sichtfeld / Vollbild 26 der Kameraeinrichtung 8 (aus Fig. 2) mit einer Verpackung 4. Auf der Verpackung 4 ist ein Sicherheitsmerkmal 2 und/oder GTIN und/oder Barcode 32 aufgebracht. Die Auswerteeinrichtung 12 reduziert für die Serienaufnahme mit unterschiedlichen Wellenlängen den Bildbereich 26 auf den Bereich 28 des Sicherheitsmerkmals und ermöglicht damit eine schnelle Serienaufnahme mit den unterschiedlichen Wellenlängen.

Fig. 4 zeigt schematisch und rein beispielhaft eine erfindungsgemäße Vorrichtung 1. Diese erfindungsgemäße Vorrichtung 1 weist bevorzugt eine Beleuchtungseinrichtung 6, insbesondere zum definierten Emittieren von vorbestimmten Wellenlängen, auf. Weiterhin ist bevorzugt eine Kamereinrichtung 8 vorgesehen, die als CCD- oder CMOS-Kamera aufgebaut sein kann. Die von der Kameraeinrichtung 8 erfassten Reflektionswerte werden bevorzugt über eine Signal- und/oder Datenverbindung 10, insbesondere eine kabel- oder boardbasierte Leitung, an eine Auswerteeinheit 12 übermittelt. Weiterhin ist eine Verpackung 4 gezeigt, die z.B. als Dose oder PET-Flasche ausgebildet sein kann. Die Verpackung 4 weist dabei ein farbliches Sicherheitsmerkmal 2 auf. Das von der Beleuchtungseinrichtung 6 emittierte Licht trifft daher zunächst aus das Sicherheitsmerkmal 2 nud reflektierte Anteile des Lichtes werden durch die Kameraeinrichtung 8 erfasst. Die Verpackung kann durch eine nicht gezeigt Dreh- und Vorschubvorrichtung ausgerichtet bzw. an der Kamera- und Beleuchtungseinrichtung vorbeigeführt werden.

Eventuell kann noch eine elektronische Steuereinheit für die Beleuchtung (Blitzsteuerung) vorhanden sein bzw. Bestandteil der Vorrichtung sein.

Die Beleuchtungseinheit kann mit der Kameraeinheit zusammengebaut sein und wird dann bevorzugt, insbesondere um Reflexionen zu vermeiden, mit polarisiertem Licht ausgeführt (linearer Polfilter vor Beleuchtungseinheit und ein weiterer, um bevorzugt 90° verdreht, vor der Kamera angeordnet.

Die Kameraeinheit kann mit der Auswerteeinheit über eine interne Daten- und/oder Signalverbindung zu einer komapkten Einheit zusammengebaut sein.

### Bezugszeichenliste:

- 1: Vorrichtung
- 2: Sicherheitsmarkierung
- 3: Referenzobjekt
- 4: Verpackung
- 6: Beleuchtungseinrichtung
- 8: Kameraeinrichtung
- 10: Daten- und/oder Signalverbindung
- 12: Auswerteeinrichtung
- 16.1: Beleuchtung mit erster Wellenlänge
- 16.1n: Beleuchtung mit erster Wellenlänge, wobei Identifikation von Referenzobjekt nicht erfolgte
- 16.1y: Beleuchtung mit erster Wellenlänge, wobei Identifikation von Referenzobjekt erfolgte
- 16.2: Beleuchtung mit zweiter Wellenlänge
- 16.3: Beleuchtung mit dritter Wellenlänge
- 16.4: Beleuchtung mit vierter Wellenlänge
- 16.5: Beleuchtung mit fünfter Wellenlänge
- 16.6: Beleuchtung mit sechster Wellenlänge
- 20: Identifikations-Zeitabstand
- 21: Identifikations-Zeitabstand modifiziert
- 22: Analyse-Zeitabstand
- 24: Pausen-Zeitabstand
- 26: Identifikations-Bilddaten
- 28: Analyse- Bilddaten / Reduzierter Bildbereich (Area of Interest)
- 30: Sicherheitsmerkmal
- 32: Code (Barcode oder QR-Code)
- 34: Bewegung

## Patentansprüche

1. Verfahren zum Überprüfen von zumindest einem mittels einer Sicherheitsfarbe erzeugtem farblichen Sicherheitsmerkmal (30) einer Sicherheitsmarkierung (2) auf einer Pfandverpackung (4) oder eines Pfandverpackungsbestandteils, wobei das Verfahren von einem Rücknahmeautomat für Pfandverpackungen ausgeführt wird, wobei der Rücknahmeautomat eine Vorrichtung aufweist, wobei die Vorrichtung
eine Beleuchtungseinrichtung (6) zum Beleuchten von zumindest einem Anteil der Verpackung (4) oder des Verpackungsbestandteils mit einer ersten Wellenlänge und mit Licht einer Vielzahl weiterer Analyse-Wellenlängen,
eine Kameraeinrichtung (8) zum Erfassen der Wellenlängen und zur Bereitstellung von Identifikations-Bilddaten (26) und zur Bereitstellung von Analyse-Bilddaten,
eine Auswerteeinrichtung (12) zum Auswerten der Analyse-Bilddaten,
wobei eine mathematische Aufbereitung der erfassten Analyse-Bilddaten und/oder ein Abgleich der erfassten Analyse-Bilddaten als Soll-Ist-Wert-Vergleich mit hinterlegten Spektralanalysedaten des Sicherheitsmerkmals erfolgt
und
eine Ausgabeeinrichtung zum Ausgeben eines Ergebniswerts oder Ergebnissignals in Abhängigkeit von der Auswertung, die angibt, ob das Sicherheitsmerkmal der Sicherheitsmarkierung einen als valide definierten Parameter der Pfandverpackung oder des Pfandverpackungsbestandteils wiedergibt, aufweist,
mindestens umfassend die Schritte:
Beleuchten der Verpackung (4) oder des Verpackungsbestandteils mit Licht einer ersten Wellenlänge,
Erfassen zumindest eines Anteils der reflektierten Lichtmenge mittels einer Kameraeinrichtung (8) zur Bereitstellung von Identifikations-Bilddaten (26),
Wiederholen der zuvor genannten Schritte in vorbestimmten Identifikations-Zeitabständen bis ein vordefiniertes Referenzobjekt der Sicherheitsmarkierung in den Identifikations-Bilddaten identifizierbar ist,
Beleuchten der Verpackung (4) oder des Verpackungsbestandteils mit Licht einer Vielzahl weiterer Analyse-Wellenlängen,
wobei die Verpackung (4) oder der Verpackungsbestandteil nacheinander mit den einzelnen weiteren Analyse-Wellenlängen beleuchtet wird, um verschiedene Analyse-Bilddaten des Sicherheitsmerkmals in Abhängigkeit von den Analyse-Wellenlängen zu erzeugen,
wobei die einzelnen Beleuchtungen mit den weiteren Analyse-Wellenlängen nacheinander in Analyse-Zeitabständen erfolgen,
wobei die Analyse-Zeitabstände kürzer sind als die Identifikations-Zeitabstände,
Erfassen zumindest eines Anteils der reflektierten Lichtmenge des Lichts jeder weiteren Analyse-Wellenlänge mit der Kameraeinrichtung (8) zur Bereitstellung von Analyse-Bilddaten,
Auswerten der Analyse-Bilddaten,
wobei eine mathematische Aufbereitung der erfassten Analyse-Bilddaten und/oder ein Abgleich der erfassten Analyse-Bilddaten als Soll-Ist-Wert-Vergleich mit hinterlegten Spektralanalysedaten des Sicherheitsmerkmals erfolgt
und
Ausgeben eines Ergebniswerts oder Ergebnissignals in Abhängigkeit von der Auswertung, die angibt, ob das Sicherheitsmerkmal der Sicherheitsmarkierung einen als valide definierten Parameter der Pfandverpackung oder des Pfandverpackungsbestandteils wiedergibt.

2. Verfahren nach Anspruch 1,
**dadurch gekennzeichnet, dass**
in Abhängigkeit des identifizierten Referenzobjekts ein Analyse-Bildbereich definiert wird, der kleiner ist als der bei der Identifikation des Referenzobjekts erfasste Bildbereich, wobei zum Auswerten der Analyse-Bilddaten nur die bezüglich des Analyse-Bildbereichs erfassten Analyse-Bereich-Bilddaten ausgewertet werden.

3. Verfahren nach Anspruch 2,
**dadurch gekennzeichnet, dass**
nach der Identifikation des Referenzobjekts die Verpackung (4) oder der Verpackungsbestandteil mindestens oder genau ein weiteres Mal mit Licht der ersten Wellenlänge beleuchtet wird, wobei zumindest ein Anteil der reflektierten Lichtmenge mittels der Kameraeinrichtung (8) zur Bereitstellung von Bewegungs-Bilddaten erfasst wird, wobei aus den Identifikations-Bilddaten und den Bewegungs-Bilddaten ein Bewegungsvektor der Verpackung (4) oder des Verpackungsbestandteils bestimmt wird.

4. Verfahren nach Anspruch 3,
**dadurch gekennzeichnet, dass**
der Analyse-Bildbereich in Abhängigkeit des Bewegungsvektors für die jeweils einer Analyse-Wellenlänge zugehörigen Analyse-Bilddaten bestimmt wird.

5. Verfahren nach einem der vorangegangenen Ansprüche,
**dadurch gekennzeichnet, dass**
die Analyse-Wellenlängen mehrere Wellenlängen im Bereich zwischen 650nm und 800nm umfassen.

6. Verfahren nach Anspruch 5,
**dadurch gekennzeichnet, dass**
die Analyse-Wellenlängen ferner auch eine oder mehrere Wellenlängen im Bereich zwischen 380nm und 650nm umfasst.

7. Verfahren nach Anspruch 6,
**dadurch gekennzeichnet, dass**
die Wellenlängen im Bereich zwischen 650nm und 800nm, insbesondere zwischen 680nm und 750nm, hinsichtlich eines Farbumschlagsintervall ausgewertet werden
und
die Wellenlänge/n unterhalb dieses Bereichs mittels des Soll-Ist-Wert-Vergleichs ausgewertet wird/werden.

8. Verfahren nach einem der vorangegangenen Ansprüche,
**dadurch gekennzeichnet, dass**
die Identifikations-Zeitabstände zwischen 10ms und 100ms liegen, insbesondere zwischen 30ms und 70ms,
und
die Analyse-Zeitabstände kleiner sind als 10ms, insbesondere kleiner sind als 5ms oder kleiner sind als 2ms oder kleiner sind als 0,5 ms.

9. Verfahren nach einem der vorangegangenen Ansprüche,
**dadurch gekennzeichnet, dass**
die Identifikations-Bilddaten je Erfassung mindestens das 10-fache, insbesondere mindestens das 20-fache oder mindestens das 50-fache oder mindestens das 100-fache, an Bildinformationen umfassen als die Analyse-Bilddaten je Erfassung umfassen.

10. Verfahren nach einem der vorangegangenen Ansprüche,
**dadurch gekennzeichnet, dass**
das Sicherheitsmerkmal (2) mindestens eine weitere Farbe je Verpackung (4) oder Verpackungsbestandteil aufweist,
wobei für die weitere Farbe ebenfalls eine Beleuchtung der Verpackung (4) oder des Verpackungsbestandteils mit Licht unterschiedlicher Wellenlänge, eine Erfassung der reflektierten Lichtmenge bezüglich zumindest fünf vorbestimmter Wellenlängen, wobei die Wellenlänge zumindest hinsichtlich der fünf Aufnahmen voneinander verschieden sind und in einem Farbumschlagsintervall (14) der zweiten Farbe liegen, ein Abgleich der je vorbestimmter Wellenlänge erfassten Lichtmenge oder einer daraus erzeugten mathematischen Aufbereitung mit einem Referenzkriterium und eine Ausgabe eines Signals oder Werts in Abhängigkeit von dem Abgleich erfolgt,
wobei überprüft wird, ob ein Abgleich bzgl. einer Farbe oder alle Abgleiche oder keiner der Abgleiche zu einer Übereinstimmung mit dem Referenzkriterium geführt hat.

11. Verfahren nach Anspruch 10,
**dadurch gekennzeichnet, dass**
hinsichtlich der zweiten Farbe zumindest die Mehrzahl der hinsichtlich der reflektierten Lichtmenge erfassten Wellenlängen in einem Wellenlängenbereich liegen, der **dadurch gekennzeichnet ist, dass** in einem ersten Bereichsende mindestens 80% des in der entsprechenden Wellenlänge ausgestrahlten Lichts reflektiert wird und in einem zweiten Bereichsende weniger als 20% des in der entsprechenden Wellenlänge ausgestrahlten Lichts reflektiert wird.

12. Vorrichtung zum Ausführen eines Verfahrens gemäß einem der vorangegangenen Ansprüche,
mindestens umfassend
eine Beleuchtungseinrichtung (6) zum Beleuchten von zumindest einem Anteil der Verpackung (4) oder des Verpackungsbestandteils mit einer ersten Wellenlänge und mit Licht einer Vielzahl weiterer Analyse-Wellenlängen,
eine Kameraeinrichtung (8) zum Erfassen der Wellenlängen und zur Bereitstellung von Identifikations-Bilddaten (26) und zur Bereitstellung von Analyse-Bilddaten,
eine Auswerteeinrichtung (12) zum Auswerten der Analyse-Bilddaten,
wobei eine mathematische Aufbereitung der erfassten Analyse-Bilddaten und/oder ein Abgleich der erfassten Analyse-Bilddaten als Soll-Ist-Wert-Vergleich mit hinterlegten Spektralanalysedaten des Sicherheitsmerkmals erfolgt
und
eine Ausgabeeinrichtung zum Ausgeben eines Ergebniswerts oder Ergebnissignals in Abhängigkeit von der Auswertung, die angibt, ob das Sicherheitsmerkmal der Sicherheitsmarkierung einen als valide definierten Parameter der Pfandverpackung oder des Pfandverpackungsbestandteils wiedergibt.

13. Vorrichtung nach Anspruch 12,
**dadurch gekennzeichnet, dass**
die Kameraeinrichtung eine CCD-Kamera oder eine CMOS-Kamera ist,
wobei die Kameraeinrichtung (8) Bilddaten mit einer Frequenz erfasst, die kleiner ist als 50 Bilder pro Sekunde.

14. Rücknahmeautomat für Pfandverpackungen zum Ausführen eines Verfahrens gemäß einem der Ansprüche 1-11, mindestens umfassend eine Vorrichtung nach Anspruch 12 oder 13.

15. Computer Programm Produkt zum Ausführen eines Verfahrens nach einem der Ansprüche 1 bis 11.

## Claims

1. Method for analyzing at least one colored security feature (30) of a security marking (2) on a deposit packaging (4) or a deposit packaging component generated by means of a security color, the method being carried out by a reverse vending machine for deposit packaging, the reverse vending machine comprising a device, the device comprising
an illumination device (6) for illuminating at least a portion of the packaging (4) or the packaging component with a first wavelength and with light of a plurality of further analysis wavelengths,
a camera device (8) for capturing the wavelengths and for providing identification image data (26) and for providing analysis image data,
an evaluation device (12) for evaluating the analysis image data,
wherein a mathematical processing of the captured analysis image data and/or a comparison of the captured analysis image data as a target/actual value comparison with stored spectral analysis data of the security feature takes place
and
an output device for outputting a result value or result signal as a function of the evaluation, which indicates whether the security feature of the security marking reflects a parameter of the deposit packaging or the deposit packaging component defined as valid,
comprising at least the steps of
Illuminating the packaging (4) or the packaging component with light of a first wavelength,
capturing at least a portion of the reflected light by means of a camera device (8) to provide identification image data (26),
repeating the aforementioned steps at predetermined identification time intervals until a predefined reference object of the security marking can be identified in the identification image data,
illuminating the package (4) or the package component with light of a plurality of further analysis wavelengths,
wherein the package (4) or the package component is successively illuminated with the individual further analysis wavelengths to generate different analysis image data of the security feature depending on the analysis wavelengths,
wherein the individual illuminations with the further analysis wavelengths are carried out successively at analysis time intervals,
wherein the analysis time intervals are shorter than the identification time intervals,
capturing at least a portion of the reflected light quantity of the light of each further analysis wavelength with the camera device (8) to provide analysis image data,
evaluating the analysis image data,
wherein a mathematical processing of the captured analysis image data and/or a comparison of the captured analysis image data as a target/actual value comparison with stored spectral analysis data of the security feature takes place
and
outputting a result value or result signal as a function of the evaluation, which indicates whether the security feature of the security marking reflects a parameter of the deposit packaging or of the deposit packaging component that is defined as valid.

2. Method according to claim 1,
**characterized in that**
depending on the identified reference object, an analysis image area is defined which is smaller than the image area captured during the identification of the reference object, wherein only the analysis image data captured with respect to the analysis image area is evaluated in order to evaluate the analysis image data.

3. Method according to claim 2,
**characterized in that**
after the identification of the reference object, the packaging (4) or the packaging component is illuminated at least or exactly once more with light of the first wavelength, at least a portion of the reflected light quantity being captured by means of the camera device (8) to provide motion image data, a motion vector of the packaging (4) or of the packaging component being determined from the identification image data and the motion image data.

4. Method according to claim 3,
**characterized in that**
the analysis image area is determined as a function of the motion vector for the analysis image data respectively associated with an analysis wavelength.

5. Method according to one of the preceding claims,
**characterized in that**
the analysis wavelengths comprise several wavelengths in the range between 650 nm and 800 nm.

6. Method according to claim 5,
**characterized in that**
the analysis wavelengths further comprising one or more wavelengths in the range between 380nm and 650nm.

7. Method according to claim 6,
**characterized in that**
the wavelengths in the range between 650nm and 800nm, in particular between 680nm and 750nm, are evaluated with respect to a color change interval
and
the wavelength(s) below this range are evaluated by means of the target/actual value comparison.

8. Method according to one of the preceding claims,
**characterized in that**
the identification time intervals are between 10ms and 100ms, in particular between 30ms and 70ms,
and
the analysis time intervals are smaller than 10ms, in particular smaller than 5ms or smaller than 2ms or smaller than 0.5 ms.

9. Method according to one of the preceding claims,
**characterized in that**
the identification image data comprise at least 10 times, in particular at least 20 times or at least 50 times or at least 100 times, more image information per acquisition than the analysis image data comprise per capture.

10. Method according to one of the preceding claims,
**characterized in that**
the security feature (2) comprises at least one further color per packaging (4) or packaging component,
wherein for the further color also an illumination of the packaging (4) or the packaging component with light of different wavelengths, a capture of the reflected light quantity with respect to at least five predetermined wavelengths, wherein the wavelengths are different from each other at least with respect to the five captures and lie in a color change interval (14) of the second color, a comparison of the light quantity captured per predetermined wavelength or a mathematical processing generated therefrom with a reference criterion and an output of a signal or value depending on the comparison,
wherein it is checked whether a comparison with respect to one color or all comparisons or none of the comparisons has led to a match with the reference criterion.

11. Method according to claim 10,
**characterized in that**
with respect to the second color, at least the majority of the wavelengths captured with respect to the amount of reflected light lie in a wavelength range which is **characterized in that** at least 80% of the light emitted in the corresponding wavelength is reflected in a first end of the range and less than 20% of the light emitted in the corresponding wavelength is reflected in a second end of the range.

12. Device for carrying out a method according to any one of the preceding claims,
comprising at least
an illumination device (6) for illuminating at least a portion of the package (4) or the package component with a first wavelength and with light of a plurality of further analysis wavelengths,
a camera device (8) for capturing the wavelengths and for providing identification image data (26) and for providing analysis image data,
an evaluation device (12) for evaluating the analysis image data,
wherein a mathematical processing of the captured analysis image data and/or a comparison of the captured analysis image data as a target/actual value comparison with stored spectral analysis data of the security feature takes place
and
an output device for outputting a result value or result signal as a function of the evaluation, which indicates whether the security feature of the security marking reflects a parameter of the deposit packaging or of the deposit packaging component that is defined as valid.

13. Device according to claim 12,
**characterized in that**
the camera device is a CCD camera or a CMOS camera,
wherein the camera device (8) captures image data at a frequency which is less than 50 frames per second.

14. Reverse vending machine for deposit packages for carrying out a method according to any one of claims 1-11,
comprising at least one device according to claim 12 or 13.

15. A computer program product for carrying out a method according to any one of claims 1-11.

## Revendications

1. Procédé de vérification d'au moins une caractéristique de sécurité colorée (30), générée au moyen d'une couleur de sécurité, d'un marquage de sécurité (2) sur un emballage consigné (4) ou un composant d'emballage consigné, dans lequel le procédé est exécuté par un automate de déconsigne pour emballages consignés, dans lequel l'automate de déconsigne comprend un dispositif, dans lequel ce dispositif comprend
un dispositif d'éclairage (6) pour l'éclairage d'au moins une partie de l'emballage (4) ou du composant d'emballage avec une première longueur d'onde et avec une lumière d'une pluralité de longueurs d'ondes d'analyse supplémentaires,
un dispositif de caméra (8) pour la mesure des longueurs d'ondes et pour la mise à disposition de données d'images d'identification (26) et pour la mise à disposition de données d'images d'analyse,
un dispositif d'exploitation (12) pour l'exploitation des données d'images d'analyse,
dans lequel un traitement mathématique des données d'images d'analyse et/ou une comparaison des données d'images d'analyse mesurées est effectué en tant que comparaison valeurs de consigne - valeurs réelles avec des données d'analyse spectrale enregistrées de la caractéristique de sécurité
et
un dispositif de sortie pour la sortie d'une valeur de résultat ou d'un signal de résultat en fonction de l'exploitation, qui indique si la caractéristique de sécurité du marquage de sécurité reproduit un paramètre, défini comme valide, de l'emballage consigné ou du composant d'emballage consigné,
comprenant au moins les étapes suivantes :
éclairage de l'emballage (4) ou du composant d'emballage avec une lumière d'une première longueur d'onde,
mesure d'au moins une partie de la quantité de lumière réfléchie au moyen d'un dispositif de caméra (8) pour la mise à disposition de données d'images d'identification (26),
répétition des étapes précédentes à des intervalles de temps d'identification prédéterminés jusqu'à ce qu'un objet de référence prédéfini du marquage de sécurité puisse être identifié dans les données d'images d'identification,
éclairage de l'emballage (4) ou du composant d'emballage avec une lumière d'une pluralité de longueurs d'ondes d'analyse supplémentaires,
dans lequel l'emballage (4) ou le composant d'emballage est éclairé successivement supplémentaires afin de générer différentes données d'images d'analyse de la caractéristique de sécurité en fonction des longueurs d'onde d'analyse,
dans lequel les différents éclairages avec les différentes longueurs d'ondes d'analyse ont lieu successivement à des intervalles de temps d'analyse,
dans lequel les intervalles de temps d'analyse sont plus courts que les intervalles de temps d'identification,
mesure d'au moins une partie de la quantité de lumière réfléchie de la lumière de chaque longueur d'onde d'analyse supplémentaire avec le dispositif de caméra (8) pour la mise à disposition de données d'images d'analyse,
exploitation des données d'images d'analyse,
dans lequel un traitement mathématique des données d'images d'analyse mesurées et/ou une comparaison des données d'images d'analyse mesurées est effectué en tant que comparaison valeurs de consigne - valeurs réelles avec des données d'analyse spectrale enregistrées de la caractéristique de sécurité
et
sortie d'une valeur de résultat ou d'un signal de résultat en fonction de l'exploitation, qui indique si la caractéristique de sécurité du marquage de sécurité reproduit un paramètre, défini comme valide, de l'emballage consigné ou du composant d'emballage consigné.

2. Procédé selon la revendication 1,
**caractérisé en ce que**
en fonction de l'objet de référence identifié, une zone d'image d'analyse est définie, qui est plus petite que la zone d'image mesurée lors de l'identification de l'objet de référence, dans lequel, pour l'exploitation des données d'images d'analyse, seules les données d'images d'analyse mesurées en ce qui concerne la zone d'image d'analyse sont exploitées.

3. Procédé selon la revendication 2,
**caractérisé en ce que**
après l'identification de l'objet de référence, l'emballage (4) ou le composant d'emballage est éclairé au moins ou exactement une fois supplémentaire avec une lumière de la première longueur d'onde, dans lequel au moins une partie de la quantité de lumière réfléchie est mesurée au moyen du dispositif de caméra (8), pour la mise à disposition de données d'images de mouvement, dans lequel, à partir des données d'images d'identification et des données d'images de mouvement, un vecteur de mouvement de l'emballage (4) ou du composant d'emballage est déterminé.

4. Procédé selon la revendication 3,
**caractérisé en ce que**
la zone d'image d'analyse est déterminée en fonction du vecteur de mouvement pour les données d'images d'analyse correspondant respectivement à une longueur d'onde d'analyse.

5. Procédé selon l'une des revendications précédentes,
**caractérisé en ce que**
les longueurs d'ondes d'analyse comprennent plusieurs longueurs d'onde dans la plage entre 650 nm et 800 nm.

6. Procédé selon la revendication 5,
**caractérisé en ce que**
les longueurs d'ondes d'analyse comprennent en outre également une ou plusieurs longueurs d'ondes dans la plage entre 380 nm et 650 nm.

7. Procédé selon la revendication 6,
**caractérisé en ce que**
les longueurs d'onde dans la plage entre 650 nm et 800 nm, plus particulièrement entre 680 nm et 750 nm, sont analysées en ce qui concerne un intervalle de changement de couleur
et
la ou les longueurs d'ondes en dessous de cette plage est/sont analysée(s) au moyen d'une comparaison valeurs de consigne - valeur réelle.

8. Procédé selon l'une des revendications précédentes,
**caractérisé en ce que**
les intervalles de temps d'identification se trouvent entre 10 ms et 100 ms, plus particulièrement entre 30 ms et 70 ms,
et
les intervalles de temps d'analyse sont inférieurs à 10 ms, plus particulièrement inférieurs à 5 ms ou inférieurs à 2 ms ou inférieurs à 0,5 ms.

9. Procédé selon l'une des revendications précédentes,
**caractérisé en ce que**
les données d'images d'identification contiennent, par mesure, au moins 10 fois, plus particulièrement au moins 20 fois ou au moins 50 fois ou au moins 100 fois plus d'informations d'images que les données d'images d'analyse par mesure.

10. Procédé selon l'une des revendications précédentes,
**caractérisé en ce que**
la caractéristique de sécurité (2) présente au moins une couleur supplémentaire par emballage (4) ou par composant d'emballage,
dans lequel, pour la couleur supplémentaire, un éclairage de l'emballage (4) ou du composant d'emballage avec une lumière d'une longueur d'onde différente, une mesure de la quantité de lumière réfléchie en fonction d'au moins cinq longueurs d'ondes prédéterminées, dans lequel les longueurs d'ondes sont différentes entre elles au moins en ce qui concerne les cinq enregistrements et se trouvent dans un intervalle de changement de couleur (14) de la deuxième couleur, a lieu également une comparaison de la quantité de lumière mesurée pour chaque longueur d'onde prédéterminée ou un traitement mathématique généré à partir de celle-ci, avec un critère de référence et une sortie d'un signal ou d'une valeur en fonction de la comparaison,
dans lequel il est vérifié si une comparaison concernant une couleur ou toutes les comparaisons ou aucune des comparaisons n'a conduit à une conformité avec le critère de référence.

11. Procédé selon la revendication 10,
**caractérisé en ce que**
en ce qui concerne la deuxième couleur, au moins la pluralité des longueurs d'ondes mesurées en ce qui concerne la quantité de lumière réfléchie se trouvent dans une plage de longueurs d'ondes qui est **caractérisé en ce que**, dans une première extrémité de plage, au moins 80 % de la lumière émise dans la longueur d'onde correspondante est réfléchie et, dans une deuxième extrémité de plage, moins de 20 % de la lumière émise dans la longueur d'onde correspondante est réfléchie.

12. Dispositif pour l'exécution d'un procédé selon l'une des revendications précédentes, comprenant au moins
un dispositif d'éclairage (6) pour l'éclairage d'au moins une partie de l'emballage (4) ou du composant d'emballage avec une première longueur d'onde et avec une lumière d'une pluralité de longueurs d'ondes d'analyse,
un dispositif de caméra (8) pour la mesure des longueurs d'ondes et pour la mise à disposition de données d'images d'identification (26) et pour la mise à disposition de données d'images d'analyse,
un dispositif d'exploitation (12) pour l'exploitation des données d'images d'analyse,
dans lequel un traitement mathématique des données d'images d'analyse et/ou une comparaison des données d'images d'analyse mesurées est effectué en tant que comparaison valeurs de consigne - valeurs réelles avec des données d'analyse spectrale enregistrées de la caractéristique de sécurité
et
un dispositif de sortie pour la sortie d'une valeur de résultat ou d'un signal de résultat en fonction de l'exploitation, qui indique si la caractéristique de sécurité du marquage de sécurité reproduit un paramètre, défini comme valide, de l'emballage consigné ou du composant d'emballage consigné.

13. Dispositif selon la revendication 12,
**caractérisé en ce que**
le dispositif de caméra est une caméra CCD ou une caméra CMOS,
dans lequel le dispositif de caméra (8) mesure des données d'images avec une fréquence inférieure à 50 images par seconde.

14. Automate de déconsigne pour emballages consignés, pour l'exécution d'un procédé selon l'une des revendications 1 - 11, comprenant au moins un dispositif selon la revendication 12 ou 13.

15. Produit de programme informatique pour l'exécution d'un procédé selon l'une des revendications 1 à 11.
